# FASCICULE DE BREVET EUROPEEN

(11) **EP 4 170 873 B1**
(45) Date de publication et mention de la délivrance du brevet: **20.12.2023**
(21) Numéro de dépôt: 22201947.3
(22) Date de dépôt: 17.10.2022
(51) Int. Cl.: H02K 5/20, H02K 9/06, H02K 5/10, H02K 1/20, H02K 1/32

(54) **MACHINE ÉLECTRIQUE TOURNANTE ET VÉHICULE ASSOCIÉ**
ELEKTRISCHE DREHMASCHINE UND FAHRZEUG DAMIT
ROTATING ELECTRIC MACHINE AND VEHICLE THEREOF

(30) Priorité: 19.10.2021 FR 2111081
(43) Date de publication de la demande: 26.04.2023
(73) Titulaire: ALSTOM Holdings, 93400 Saint-Ouen-sur-Seine (FR)
(72) Inventeur: PAULIN, Herve, 25290 ORNANS (FR); SCHERER, Michel, 25320 GRANDFONTAINE (FR); DUBOIS, Philippe, 25620 TREPOT (FR); RANDRIA, Andry-Mamy, 25000 BESANCON (FR); SOUGH, Mohamed-Laid, 25320 TORPES (FR)
(74) Mandataire: Lavoix

(56) Documents cités:
- JP-B2- 3 777 758
- JP-U- S5 661 150
- US-A- 2 193 408
- US-A1- 2006 226 717
- US-B1- 6 570 276

## Description

La présente invention concerne le domaine des machines électriques tournantes possédant un système de ventilation.

Il est nécessaire de refroidir une machine électrique tournante (e.g. un moteur électrique ou un générateur électrique) lorsque que celle-ci fonctionne afin d'éviter toute surchauffe et ainsi de garantir son bon fonctionnement. Le document US 2006/226717 A1 décrit une méthode de refroidissement pour une machine électrique tournante.

A cet effet, il est connu de munir la machine électrique tournante d'un système de ventilation permettant la circulation d'un flux d'air dans des conduits de ventilation situés dans la machine électrique tournante. Par exemple, il est connu de ménager au moins un conduit de ventilation destiné à refroidir le rotor et au moins un conduit de ventilation destiné à refroidir le stator.

Une ouverture est généralement ménagée dans le carter de la machine électrique tournante afin de permettre l'entrée de l'air frais provenant de l'extérieur dans la machine électrique tournante.

Cependant, l'air provenant de l'extérieur peut potentiellement contenir des poussières et des contaminants, tels que des particules de matières solides comme des poussières métalliques, des liquides issus par exemple des opérations de nettoyage ou encore de la glace ou de la neige.

Or ces poussières et contaminants peuvent endommager l'intérieur de la machine électrique tournante, et plus particulièrement un bobinage d'un stator de la machine électrique tournante (ou « bobinage stator »).

Par exemple, l'entrée de particules solides peut entrainer l'abrasion de parties ou de composants du bobinage, et plus particulièrement de têtes de connexion du bobinage stator qui sont prévues pour le raccordement du bobinage à un circuit électrique et qui sont généralement situées à proximité de l'entrée d'air.

De plus, l'infiltration de liquide dans une zone de faiblesse du bobinage, comme par exemple au niveau des têtes de connexion, peut causer la défaillance du bobinage.

En outre, la géométrie irrégulière des têtes de connexion du bobinage situées à proximité de l'ouverture d'entrée d'air perturbe l'écoulement de l'air et provoque des variations importantes de pertes de charge. Ces variations de pertes de charges ont une influence négative sur la stabilité de la répartition du flux d'air entre les conduits de ventilation, ce qui peut impacter la stabilité thermique du moteur.

Un des buts de l'invention est de proposer une machine électrique tournante apte à être refroidie de manière à assurer une stabilité thermique de la machine tournante tout en protégeant la machine électrique tournante.

A cet effet, l'invention a pour objet une machine électrique tournante présentant un axe central comprenant :
- un rotor, le rotor étant monté rotatif autour de l'axe central ;
- un stator, le stator comprenant un bobinage de forme générale cylindrique centré sur l'axe central et possédant une pluralité de têtes de connexion prévues pour le raccordement du bobinage à un circuit électrique, les têtes de connexion étant situées à une extrémité axiale du bobinage dans une cavité de la machine électrique tournante ;
- un système de ventilation par air, le système de ventilation par air comprenant une entrée d'air pour l'entrée d'un flux d'air, l'entrée d'air débouchant dans la cavité dans laquelle se situent les têtes de connexion, des premiers conduits de ventilation du rotor et des deuxièmes conduits de ventilation du stator ; et
- un déflecteur configuré pour diviser le flux d'air pénétrant dans la cavité par l'entrée d'air en un premier flux d'air circulant vers les premiers conduits de ventilation et un deuxième flux d'air circulant vers les deuxièmes conduits de ventilation, le déflecteur étant configuré de telle sorte que le premier flux d'air et le deuxième flux d'air contournent les têtes de connexion sans passer au travers des têtes de connexion.

L'installation d'un déflecteur à proximité de l'entrée d'air permet tout d'abord de protéger mécaniquement les têtes de connexion des poussières et contaminants contenus dans l'air frais extérieur. De plus, le déflecteur permet de séparer de manière contrôlée le flux d'air entre les premiers conduits de ventilation et les deuxièmes conduits de ventilation, assurant une stabilité thermique de la machine électrique tournante.

Dans des modes de réalisation particuliers, la machine électrique tournante comprend une ou plusieurs des caractéristiques optionnelles suivantes, prise(s) individuellement ou suivant toute combinaison techniquement possible :
- les premiers conduits de ventilation traversent le rotor et les deuxièmes conduits de ventilation traversent le stator ;
- le système de ventilation comprend une sortie d'air pour la sortie de l'air ayant circulé dans les premiers conduits de ventilation et les deuxièmes conduits de ventilation.
- la machine électrique tournante est autoventilée ;
- le système de ventilation comprend un ventilateur lié en rotation au rotor pour forcer la circulation d'un flux d'air via à l'entrée d'air et à travers les premiers conduits de ventilation et les deuxièmes conduits de ventilation du fait de la rotation du rotor ;
- le système de ventilation est configuré pour générer une ventilation tirée ;
- les têtes de connexion sont alignées axialement avec le déflecteur ;
- en vue suivant l'axe central, les têtes de connexion sont situées derrière le déflecteur ;
- le déflecteur possède un bord radialement interne proche de l'axe central et un bord radialement externe éloigné de l'axe central, les têtes de connexion étant situées à une distance radiale de l'axe central telle qu'elles sont situées radialement entre le bord radialement interne et le bord radialement externe du déflecteur ;
- le déflecteur présente une forme s'évasant de l'entrée d'air vers l'intérieur de la cavité dans laquelle sont situées les têtes de connexion ;
- la Machine électrique tournante comprend un carter possédant un flasque dans lequel est ménagé l'entrée d'air, le déflecteur étant porté par le flasque ;
- le déflecteur est intégré au flasque ;

L'invention a également pour objet un véhicule, notamment un véhicule ferroviaire, comprenant une machine électrique tournante telle que définie ci-dessus.

L'invention et ses avantages seront mieux compris à la lecture de la description qui va suivre, donnée uniquement à titre d'exemple non limitatif, et faite en se référant aux dessins annexés, sur lesquels :
- [Fig 1] la figure 1 est une représentation schématique de côté d'un véhicule ferroviaire;
- [Fig 2] la figure 2 est une demi-vue en coupe axiale d'une machine électrique tournante embarquée dans le véhicule ferroviaire de la figure 1 ; et
- [Fig 3] la figure 3 est une vue de face de la machine électrique tournante de la figure 2.

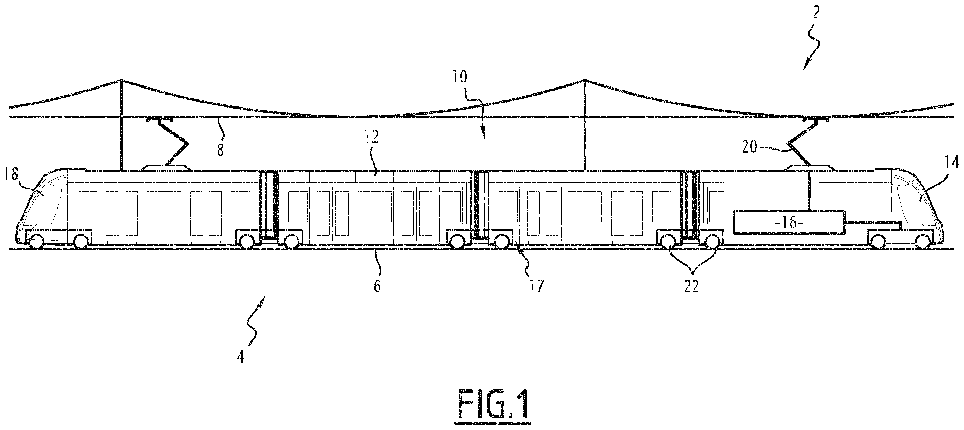

Un système ferroviaire 2 comprenant une infrastructure ferroviaire 4 et un véhicule ferroviaire 10 est illustré sur la figure 1.

L'infrastructure ferroviaire 4 comprend une voie ferrée 6 et une caténaire 8.

La caténaire 8 est un dispositif d'alimentation électrique suspendu au-dessus de la voie ferroviaire 6. La caténaire 8 comprend au moins un fil de contact électriquement conducteur. La caténaire 8 est portée par au moins un câble porteur.

Par la suite, seul le véhicule ferroviaire 10 sera décrit mais l'homme du métier comprendra que l'invention s'applique à tout type de véhicule, par exemple à un véhicule automobile, aérien ou maritime.

Le véhicule ferroviaire 10 est configuré pour permettre le transport de voyageurs et/ou de marchandises.

Comme visible sur la figure 1, le véhicule ferroviaire 10 comporte une ou plusieurs voiture(s), et au moins une machine électrique tournante 16 embarquée dans le véhicule 10.

Lorsque le véhicule ferroviaire 10 possède plusieurs voitures, celles-ci sont disposées à la file, les unes derrière les autres.

Le véhicule ferroviaire 10 est composé par exemple d'au moins une voiture intermédiaire 12, ici deux voitures intermédiaires 12, et de deux voitures d'extrémité 14, 18. Chaque voiture d'extrémité 14, 18 est située à une extrémité respective du véhicule ferroviaire 10.

Le véhicule ferroviaire 10 comprend en outre au moins un pantographe 20 disposé sur l'une des voitures 12, 14, 18. Le pantographe 20 est un dispositif articulé configuré pour capter un courant électrique par frottement sur la caténaire 8.

Chaque voiture 12, 14, 18 s'étend suivant une direction longitudinale et possède deux extrémités longitudinales.

Le véhicule ferroviaire 10 comprend des bogies 17 agencés pour supporter les voitures 12,14, 18 et assurer leur guidage le long de la voie ferrée 6. Chaque bogie 17 supporte une voiture 12, 14, 18 reposant sur ce bogie 17 ou supporte deux voitures 12, 14, 18 voisines reposant par leurs extrémités longitudinales voisines sur ce bogie 17 (on parle alors de « bogie commun »).

Chaque bogie 17 comprend des roues 22 portées par des arbres non représentés sur les figures. Les roues 22 sont configurées pour rouler sur des rails de la voie ferrée 6 et ainsi permettre le déplacement du véhicule ferroviaire 10.

Chaque machine électrique tournante 16 est embarquée dans une voiture 12, 14, 18 du véhicule ferroviaire 10. Le véhicule ferroviaire 10 peut comprendre une seule machine électrique tournante 16 ou plusieurs machines électriques tournantes 16. Lorsque plusieurs machines électriques tournantes 16 sont prévues, elles peuvent être disposées dans une même voiture 12, 14, 18 ou réparties dans plusieurs voitures 12, 14, 18 du véhicule ferroviaire 10.

Le véhicule ferroviaire 10 comprend, sur la figure 1, une machine électrique tournante 16 embarquée dans la voiture d'extrémité 14.

En variante ou en option, le véhicule 10 comprend une machine électrique tournante 16 dans l'autre voiture d'extrémité 18et/ou une machine électrique tournante 16 embarquée dans au moins une ou dans chacune des voitures intermédiaires 12.

Comme illustré sur la figure 1, la machine électrique tournante 16 est un moteur alimenté par le courant électrique capté par le pantographe 20.

La machine électrique tournante 16 est par exemple un moteur de traction du véhicule 10 configuré pour convertir l'énergie électrique reçue en énergie mécanique permettant l'entraînement en rotation de roues 22 d'au moins un des bogies 18, et ainsi le déplacement du véhicule 10 le long de la voie ferrée 6.

En variante, la machine électrique tournante 16 est une génératrice ou un alternateur.

La machine électrique tournante 16 possède un axe central A.

Avantageusement chaque machine électrique tournante est fixée sur un bogie respectif.

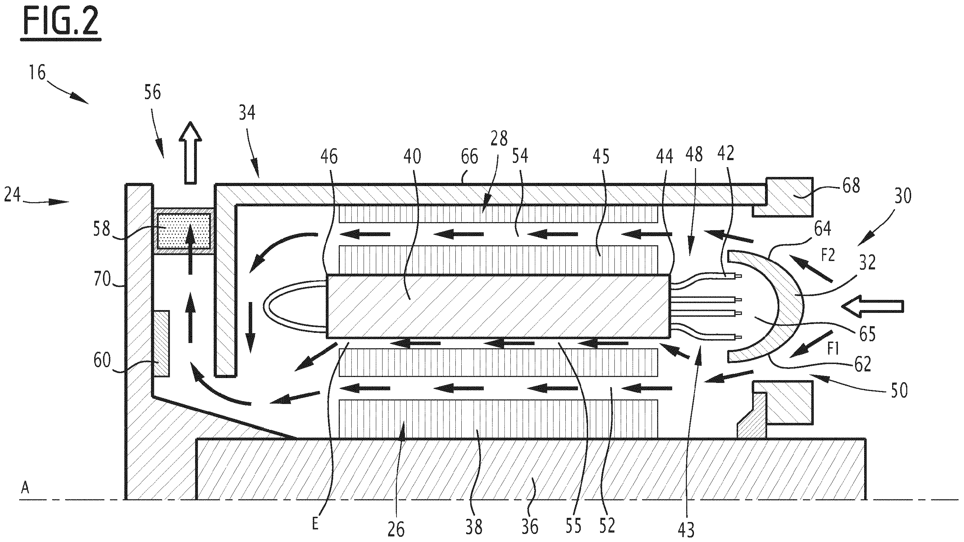

La figure 2 représente une demi-vue en coupe axiale de la machine électrique tournante 16.

La figure 2 illustre une moitié 24 de la machine électrique tournante 16 qui est par exemple une moitié haute, c'est-à-dire située au-dessus de l'axe central A. La moitié basse, non représentée sur la figure 2, située en-dessous de l'axe central A, est symétrique de la moitié 24 par rapport à l'axe central A.

Comme illustré sur la figure 2, la machine électrique tournante 16 comprend un rotor 26, un stator 28, un système de ventilation par air 30, un déflecteur 32 et, de préférence, un carter 34.

Le rotor 26 et le stator 28 définissent entre eux un entrefer E.

Le rotor 26 est de forme générale cylindrique et s'étend le long de l'axe central A.

Le rotor 26 est monté rotatif autour de l'axe central A.

Le rotor 26 comprend un arbre de rotor 36 autour duquel est disposé un circuit magnétique 38. Le circuit magnétique 38 est par exemple feuilleté. Il est composé d'une pluralité de plaques empilées suivant l'axe central A.

L'arbre de rotor 36 s'étend le long de l'axe central A et est monté rotatif autour de l'axe central A. Le circuit magnétique 38 est solidaire de l'arbre de rotor 36, en particulier en rotation autour de l'axe central A. La rotation de l'arbre de rotor 36 autour de l'axe central A entraîne la rotation du circuit magnétique 38 autour de l'axe central A.

La machine électrique tournante 16 est par exemple une machine électrique tournante à aimant permanents.

Le rotor 26 possède alors des aimants permanents (non visibles). Les aimants permanents sont portés par le circuit magnétique 38. Ils sont par exemple logés dans des logements ou dans des encoches ménagées sur une surface externe du circuit magnétique 38.

Le stator 28 comprend un bobinage 40 et une pluralité de têtes de connexion 42 prévues pour le raccordement du bobinage 40 à un circuit électrique.

Le bobinage 40 est formé d'une ou plusieurs bobine(s) électriques, de préférence de plusieurs bobines électriques.

Les têtes de connexion 42 sont configurées pour la connexion électrique du bobinage 40 à un circuit électrique, par exemple à une alimentation électrique lorsque la machine électrique tournante 16 est un moteur électrique. Chaque bobine électrique du bobinage 40 comprend par exemple deux têtes de connexion 42.

De préférence, le stator 28 comprend un circuit magnétique statorique 45. Le circuit magnétique statorique 45 est par exemple formé de plaques empilées suivant l'axe central A.

Le stator 28 s'étend autour du rotor 26. Le stator 28 est fixe en rotation autour de l'axe central A. En particulier, le bobinage 40 et, le cas échéant le circuit magnétique statorique 45, sont fixes en rotation autour de l'axe central A.

Le bobinage 40 est de forme générale cylindrique centré sur l'axe central A. Le bobinage 40 entoure le circuit magnétique 38 du rotor 26.

Le bobinage 40 comprend le long de l'axe central A, une extrémité axiale avant 44 et une extrémité axiale arrière 46.

Comme illustré sur la figure 2, une cavité 48 est ménagée dans la machine électrique tournante 16 à proximité de l'extrémité axiale avant 44 du bobinage 40. La cavité 48 est par exemple de forme annulaire et s'étend autour de l'axe central A.

Comme illustré sur la figure 2, les têtes de connexion 42 sont situées à l'extrémité axiale avant 44 du bobinage 40, dans la cavité 48 de la machine électrique tournante 16.

Plus particulièrement, les têtes de connexion 42 dépassent axialement du bobinage 40 à l'extrémité axiale avant 44 du bobinage 40, en faisant saillie dans la cavité 48. Les têtes de connexion 42 sont par exemple réparties autour de l'axe central A.

Chaque tête de connexion 42 présente une forme filaire en saillie au niveau de l'extrémité axiale avant 44 du bobinage 40.

Les têtes de connexion 42 forment ensemble un bouquet 43 de têtes de connexion 42. Le bouquet 43 présente une forme générale de couronne s'étendant autour de l'axe central A.

Le système de ventilation par air 30 comprend une entrée d'air 50 pour l'entrée d'un flux d'air, des premiers conduits 52 de ventilation du rotor 26 et des deuxièmes conduits 54 de ventilation du stator 28.

L'entrée d'air 50 est par exemple de forme annulaire et s'étend autour de l'axe central A. L'entrée d'air 50 est agencée pour recevoir un flux d'air circulant axialement.

Comme illustré sur la figure 2, l'entrée d'air 50 débouche dans la cavité 48 dans laquelle se situent les têtes de connexion 42. L'entrée d'air 50 permet une connexion fluidique entre l'extérieur et la cavité 48.

Les premiers conduits 52 de ventilation et les deuxièmes conduits de ventilation 54 s'alimentent dans la cavité 48. La cavité 48 permet l'alimentation en air des premiers conduits 52 de ventilation et des deuxièmes conduits 54 de ventilation.

Comme illustré sur la figure 2, les premiers conduits 52 de ventilation sont situés radialement entre l'arbre de rotor 36 et le bobinage 40 du stator 28.

Avantageusement, les premiers conduits 52 de ventilation sont répartis, de préférence de manière régulière, le long d'un premier cercle imaginaire centré sur l'axe central A.

Les premiers conduits 52 de ventilation s'étendent axialement, i.e. parallèlement à l'axe central A.

De préférence, les premiers conduits 52 de ventilation sont agencés pour la ventilation du rotor 26. Les premiers conduits 52 s'étendent à travers le rotor 26, plus particulièrement ici à travers le circuit magnétique rotorique 38.

Les deuxièmes conduits 54 de ventilation sont situés radialement entre le bobinage 40 du stator et l'extérieur de la machine électrique tournante 16.

Avantageusement, les deuxièmes conduits 54 de ventilation sont répartis, de préférence de manière régulière, le long d'un deuxième cercle imaginaire centrés sur l'axe central A.

Les deuxièmes conduits 54 de ventilation s'étendent axialement, i.e. parallèlement à l'axe central A.

Les deuxièmes conduits 54 de ventilation sont radialement plus éloignés de l'axe central A que les premiers conduits 52 de ventilation. Le premier cercle imaginaire présente un diamètre strictement inférieur au deuxième cercle imaginaire.

De préférence, les deuxièmes conduits 54 de ventilation sont agencés pour la ventilation du stator 28.

Comme illustré sur la figure 2, les deuxièmes conduits 54 de ventilation traversent le stator 28.

Plus particulièrement, les deuxièmes conduits 54 de ventilation s'étendent axialement entre l'extrémité axiale avant 44 et l'extrémité axiale arrière 46 du circuit magnétique statorique 45.

Avantageusement l'entrefer E définit également des conduits de ventilation 55 s'étendant entre le rotor 26 et le stator 28.

Avantageusement, le système de ventilation par air 30 comprend également une sortie d'air 56 pour la sortie de l'air ayant circulé dans les premiers conduits 52 de ventilation et les deuxièmes conduits 54 de ventilation.

La sortie d'air 56 débouche sur l'extérieur et permet une connexion fluidique entre les premiers conduits 52 de ventilation et les deuxièmes conduits 54 de ventilation et l'extérieur.

Avantageusement, une grille 58 est installée au niveau de la sortie d'air 56

De préférence, la machine électrique tournante 16 est autoventilée. Par auto ventilée, on entend que le système de ventilation 30 est configuré pour générer un flux d'air du fait du fonctionnement de la machine électrique tournante 16 elle-même, en particulier du fait de la rotation du rotor 26. Le flux d'air n'est pas généré par un ventilateur entraîné par un moteur indépendant supplémentaire.

Avantageusement, le système de ventilation 30 comprend un ventilateur 60 lié en rotation au rotor 26 pour forcer la circulation d'un flux d'air de l'entrée d'air 50 vers les premiers conduits 52 de ventilation et les deuxièmes conduits 54 de ventilation du fait de la rotation du rotor 26.

En fonctionnement, le ventilateur 60 tourne par exemple à la même vitesse que le rotor 26 auquel il est fixé.

Comme illustré sur la figure 2, le ventilateur 60 est avantageusement positionné à proximité de la sortie d'air 56, et plus particulièrement entre les premiers et deuxièmes conduits 52, 54 de ventilation et la sortie d'air 56.

Le ventilateur 60 est configuré pour forcer la circulation d'air depuis l'entrée d'air 50 vers la sortie d'air 56.

En particulier, le ventilateur 60 est configuré pour aspirer le flux d'air par l'entrée d'air 50 et faire circuler le flux d'air à travers les premiers conduits 52 de ventilation et les deuxièmes conduits 54 de ventilation jusqu'à la sortie d'air 56.

La circulation du flux d'air dans la machine électrique tournante 16 est représentée par les flèches visibles sur la figure 2.

Le ventilateur 60 est situé en aval des premiers conduits 52 de ventilation et des deuxièmes conduits 54 de ventilation en considérant le sens de circulation du flux d'air.

Le système de ventilation 30 est ainsi configuré pour générer une ventilation tirée.

Le flux d'air pénètre dans la machine électrique tournante 16 par l'entrée d'air 50, circule dans les premiers et deuxièmes conduits 52, 54 de ventilation en étant entraîné par le ventilateur 60 avant de s'échapper par la sortie d'air 56.

Le déflecteur 32 est positionné à proximité de l'entrée d'air 50, et plus particulièrement dans la cavité 48, entre les têtes de connexion 42 et l'entrée d'air 50 suivant l'axe central A.

Comme illustré par les flèches sur la figure 2, le déflecteur 32 est configuré pour diviser le flux d'air pénétrant dans la cavité 48 par l'entrée d'air 50 en un premier flux d'air F1 circulant vers les premiers conduits 52 de ventilation et avantageusement vers les conduits de ventilation 55 définis par l'entrefer E et un deuxième flux d'air F2 circulant vers les deuxièmes conduits 54 de ventilation.

Le déflecteur 32 est configuré de telle sorte que le premier flux d'air F1 et le deuxième flux d'air F2 contournent les têtes de connexion 42 sans passer au travers des têtes de connexion 42.

Le premier flux d'air F1 est un flux d'air annulaire circulant de l'entrée 50 vers les premiers conduits 52 de ventilation et avantageusement vers les conduits de ventilation 55 définis par l'entrefer E en passant à proximité du bouquet 43 de têtes de connexion 42, et le premier flux d'air F2 est un flux d'air annulaire circulant de l'entrée 50 vers les deuxièmes conduits 54 de ventilation en passant à proximité du bouquet 43 de têtes de connexion 42.

Avantageusement, le bouquet 43 formé par les têtes de connexion 42 est aligné axialement avec le déflecteur 32.

En vue suivant l'axe central A, les têtes de connexion 42 sont entièrement situées derrière le déflecteur 32. Les têtes de connexion 42 sont donc protégées d'un flux d'air provenant de l'extérieur.

Le déflecteur 32 possède un premier bord 62 radialement interne proche de l'axe central A et un deuxième bord 64 radialement externe éloigné de l'axe central A.

Les têtes de connexion 42 sont situées à une distance radiale de l'axe central A comprise entre la distance radiale entre le premier bord 62 et l'axe central A et la distance radiale entre le deuxième bord 64 et l'axe central A.

Avantageusement, le déflecteur 32 recouvre, de préférence entièrement, les têtes de connexion 42, de sorte que le premier flux d'air F1 et le deuxième flux d'air F2 n'entrent pas en contact avec les têtes de connexion 42.

Le déflecteur 32 présente par exemple sur sa face interne tournée vers les têtes de connexion, un évidement annulaire 65 à l'intérieur duquel sont reçu les têtes de connexion 42.

Avantageusement, le déflecteur 32 présente, sur sa face externe tournée vers l'entrée d'air 50, une forme s'évasant de l'entrée d'air 50 vers l'intérieur de la cavité 48 dans laquelle sont situées les têtes de connexion 42.

Par exemple, le déflecteur 32 présente une forme convexe bombée vers l'entrée d'air 50.

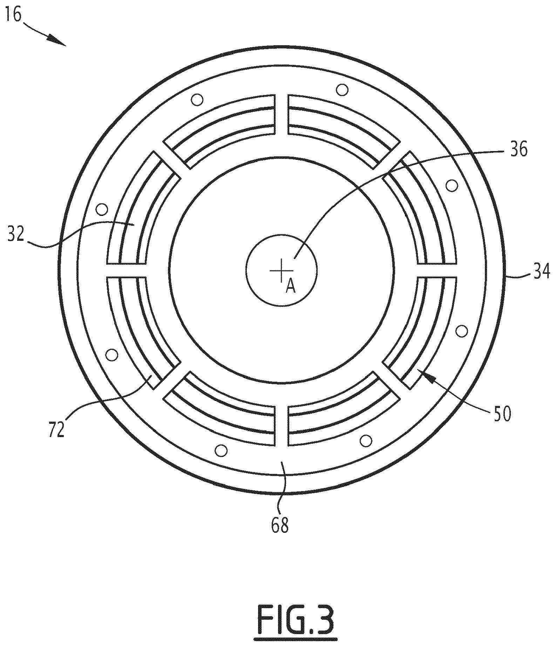

Comme illustré sur la figure 3, le déflecteur 32 est avantageusement de forme annulaire, et plus particulièrement de forme annulaire centrée sur l'axe A.

Le diamètre intérieur du déflecteur 32 est par exemple compris entre 70% et 120% de la largeur du bobinage 40 du stator 28 mesurée radialement à l'axe central A. Le diamètre extérieur du déflecteur 32 est par exemple compris entre 90% et 140% de la largeur du bobinage 40 du stator 28 mesurée radialement à l'axe central A.

Le déflecteur 32 est par exemple réalisé en acier, en fonte ou en alliage d'aluminium.

Le carter 34 s'étend autour du stator 28 et protège l'intérieur de la machine électrique tournante 16, en particulier le stator 28 et le rotor 26.

Le carter 34 comprend une paroi latérale 66 de forme générale cylindrique s'étendant suivant l'axe central A en entourant le stator 28 et le rotor 26, fermée à ses extrémités axiales avant et arrière respectivement par un flasque avant 68 et un flasque arrière 70.

La section transversale de la paroi latérale 66 est par exemple circulaire ou polygonale.

L'entrée d'air 50 est ménagée dans le flasque avant 68.

Comme cela est visible sur la figure 2, la sortie d'air 56 est ménagée sur la paroi latérale 66 du carter 32, dans le voisinage du flasque arrière 70.

Comme cela est visible sur la figure 3, l'entrée d'air 50 se présente sous la forme d'une pluralité d'ouvertures 72 en forme d'arc de cercle centrées sur l'axe central A.

Le flasque avant 68 possède une couronne interne et une couronne externe, reliées entre elles par des barres radiales. L'entrée d'air 50 est délimitée entre la couronne interne et la couronne externe. Les barres radiales divisent l'entrée d'air 50 en une pluralité d'ouvertures 72 en arc de cercle.

Comme cela est visible sur la figure 3, le déflecteur 32 est positionné derrière le flasque avant 68.

Avantageusement, le déflecteur 32 est porté par le flasque avant 68.

En variante, le déflecteur 32 est intégré au flasque avant 68.

Le déflecteur 32 intégré est par exemple fabriqué en une seule pièce de matière avec le flasque avant 68, par exemple par un procédé de fonderie.

La circulation de l'air dans la machine électrique tournante 16 représentée par les flèches visibles sur la figure 2 va maintenant être décrit.

Lors du fonctionnement de la machine électrique tournante 16, celle-ci produit de la chaleur qu'il est nécessaire d'évacuer afin de garantir un bon fonctionnement de la machine électrique tournante 16.

Le flux d'air provenant de l'extérieur est aspiré via l'entrée d'air 50 en étant tiré par le ventilateur 60.

Le flux d'air passe par l'entrée d'air 50 et rencontre le déflecteur 32 qui divise le flux d'air en un premier flux d'air F1 et un deuxième flux d'air F2.

Le premier flux d'air F1 contourne les têtes de connexion 42 sans les traverser et circule ensuite à travers :
- les premiers conduits 52 de ventilation traversant le rotor 26 jusqu'à la sortie d'air 56, et
- avantageusement les conduits de ventilation 55 définis par l'entrefer E jusqu'à la sortie d'air 56.

Le premier flux d'air F1 récupère ainsi la chaleur produite par le rotor 26 et l'évacue vers l'extérieur du véhicule 10.

Le deuxième flux d'air F2 contourne les têtes de connexion 42 sans les traverser et circule ensuite à travers les deuxième conduits 54 de ventilation traversant le bobinage 40 du stator 28 jusqu'à la sortie d'air 56.

Le deuxième flux d'air F2 récupère ainsi la chaleur produite par le stator 28 et l'évacue vers l'extérieur du véhicule 10.

On conçoit alors que la présente invention présente un certain nombre d'avantages.

Le déflecteur 32 ainsi installé au niveau de l'entrée d'air 50 permet tout d'abord de protéger le bobinage 40 du stator 28, et plus particulièrement les têtes de connexion 42, contre les pollutions particulaires et les contaminants. Le déflecteur 32 empêche que le flux d'air entrant dans la cavité 48, et potentiellement porteur de particules et de contaminent, ne viennent taper sur les têtes de connexion 42 et ne les abîme, notamment par abrasion du fait de particules abrasives présentes dans le flux d'air.

L'extension du déflecteur 32 vers l'arrière avec un recouvrement des têtes de connexion 42 par le déflecteur 32 permet de favoriser un écoulement laminaire de l'air, et de réduire ainsi les perturbations tourbillonnaires qui pourrait endommager le bobinage 40 notamment par abrasion.

De plus, en divisant le flux d'air en un premier flux d'air F1 et un deuxième flux d'air F2, le déflecteur 32 offre l'avantage de mieux maîtriser la répartition du flux d'air entre le stator 28 et le rotor 26 et d'éviter des variations de pertes de charges ayant une influence négative sur la stabilité thermique du moteur.

De plus, l'invention permet de réduire le débit d'air global nécessaire au refroidissement de la machine électrique tournante 16 et donc la taille du ventilateur 60 à installer. Cette réduction de la taille du ventilateur 60 offre l'avantage de réduire le bruit aéraulique engendré par la machine électrique tournante 16.

L'invention n'est pas limitée aux exemples de réalisation décrit ci-dessus.

Dans l'exemple de réalisation décrit ci-dessus. Le stator 28 entoure le rotor 26. Dans un autre exemple de réalisation possible, la configuration est inversée et le rotor 26 entoure le stator 28. Dans ce cas, les premiers conduits de ventilation situés radialement à l'intérieur du bobinage 40 traversent le stator 28, par exemple le circuit magnétique statorique 45, et les deuxièmes conduits de ventilation situés radialement à l'extérieur du bobinage 40 traversent le rotor, par exemple le circuit magnétique rotorique 38.

Les premiers conduits de ventilation sont agencés pour la ventilation du stator et les deuxièmes conduits de ventilation sont agencés pour la ventilation du rotor.

En dehors de cette inversion, la structure et le fonctionnement de la machine électrique tournante 16 selon ce mode de réalisation sont analogue à ceux décrits précédemment.

Par ailleurs, au lieu de fonctionner par tirage, le système de ventilation 30 pourrait fonctionner en poussant l'air. Dans ce cas, le ventilateur 60 serait disposé en amont de l'entrée d'air 50.

## Revendications

1. Machine électrique tournante présentant un axe central (A), comprenant :
- un rotor (26), le rotor (26) étant monté rotatif autour de l'axe central (A);
- un stator (28), le stator (28) comprenant un bobinage (40) de forme générale cylindrique centré sur l'axe central (A) et possédant une pluralité de têtes de connexion (42) prévues pour le raccordement du bobinage à un circuit électrique, les têtes de connexion étant situées à une extrémité axiale (44) du bobinage (40) dans une cavité (48) de la machine électrique tournante (16);
- un système de ventilation (30) par air, le système de ventilation (30) par air comprenant une entrée d'air (50) pour l'entrée d'un flux d'air, l'entrée d'air (50) débouchant dans la cavité (48) dans laquelle se situent les têtes de connexion (42), des premiers conduits de ventilation (52) du rotor (26) et des deuxièmes conduits de ventilation (54) du stator (28) ; et
- un déflecteur (32) configuré pour diviser le flux d'air pénétrant dans la cavité (48) par l'entrée d'air (50) en un premier flux d'air circulant vers les premiers conduits de ventilation (52) et un deuxième flux d'air circulant vers les deuxièmes conduits de ventilation (54), le déflecteur (32) étant configuré de telle sorte que le premier flux d'air et le deuxième flux d'air contournent les têtes de connexion (42) sans passer au travers des têtes de connexion (42).

2. Machine électrique tournante selon la revendication 1, dans lequel les premiers conduits de ventilation (52) traversent le rotor (26) et les deuxièmes conduits de ventilation (54) traversent le stator (28).

3. Machine électrique tournante selon l'une quelconque des revendications précédentes, dans lequel le système de ventilation (30) comprend une sortie d'air (56) pour la sortie de l'air ayant circulé dans les premiers conduits de ventilation (52) et les deuxièmes conduits de ventilation (54).

4. Machine électrique tournante selon l'une quelconque des revendications précédentes, la machine électrique tournante (16) étant autoventilée.

5. Machine électrique tournante selon l'une quelconque des revendications précédentes, dans laquelle le système de ventilation (30) comprend un ventilateur (60) lié en rotation au rotor (26) pour forcer la circulation d'un flux d'air via à l'entrée d'air (50) et à travers les premiers conduits de ventilation (52) et les deuxièmes conduits de ventilation (54) du fait de la rotation du rotor (26).

6. Machine électrique tournante selon l'une quelconque des revendications précédentes, dans laquelle le système de ventilation (30) est configuré pour générer une ventilation tirée.

7. Machine électrique tournante selon l'une quelconque des revendications précédentes, dans laquelle les têtes de connexion (42) sont alignées axialement avec le déflecteur (32).

8. Machine électrique tournante selon l'une quelconque des revendications précédentes, dans laquelle, en vue suivant l'axe central (A), les têtes de connexion (42) sont situées derrière le déflecteur (32).

9. Machine électrique tournante selon l'une quelconque des revendications précédentes, dans laquelle le déflecteur (32) possède un bord radialement interne (62) proche de l'axe central (A) et un bord radialement externe (64) éloigné de l'axe central (A), les têtes de connexion (42) étant situées à une distance radiale de l'axe central (A) telle qu'elles sont situées radialement entre le bord radialement interne (62) et le bord radialement externe (64) du déflecteur (32).

10. Machine électrique tournante selon l'une quelconque des revendications précédentes, dans laquelle le déflecteur (32) présente une forme s'évasant de l'entrée d'air (50) vers l'intérieur de la cavité (48) dans laquelle sont situées les têtes de connexion (42).

11. Machine électrique tournante selon l'une quelconque des revendications précédentes, comprenant un carter (34) possédant un flasque (68) dans lequel est ménagé l'entrée d'air (50), le déflecteur (32) étant porté par le flasque (68).

12. Machine électrique tournante selon la revendication 11, dans lequel le déflecteur (32) est intégré au flasque (68).

13. Véhicule, notamment véhicule ferroviaire, comprenant une machine électrique tournante (16) selon l'une des revendications précédentes.

## Patentansprüche

1. Elektrische Drehmaschine, die eine Mittelachse (A), aufweist, umfassend:
- einen Rotor (26), wobei der Rotor (26) drehbar um die Mittelachse (A) montiert ist;
- einen Stator (28), der Stator (28) umfassend eine Wicklung (40) mit allgemein zylindrischer Form umfasst, die auf der Mittelachse (A) zentriert ist und eine Vielzahl von Verbindungsköpfen (42) besitzt, die für den Anschluss der Wicklung an einen Stromkreis bereitgestellt sind, wobei sich die Verbindungsköpfe an einem axialen Ende (44) der Wicklung (40) in einem Hohlraum (48) der elektrischen Drehmaschine (16) befinden;
- ein Belüftungssystem (30) mittels Luft, das Belüftungssystem (30) mittels Luft umfassend einen Lufteinlass (50) für den Eintritt eines Luftstroms, wobei der Lufteinlass (50) in den Hohlraum (48) mündet, in dem sich die Verbindungsköpfe (42) befinden, erste Belüftungskanäle (52) des Rotors (26) und zweite Belüftungskanäle (54) des Stators (28); und
- einen Deflektor (32), der konfiguriert ist, um den Luftstrom, der durch den Lufteinlass (50) in den Hohlraum (48) eintritt, in einen ersten Luftstrom, der zu den ersten Belüftungskanälen (52) strömt, und einen zweiten Luftstrom, der zu den zweiten Belüftungskanälen (54) strömt, zu teilen, wobei der Deflektor (32) konfiguriert ist, sodass der erste Luftstrom und der zweite Luftstrom die Verbindungsköpfe (42) umgehen, ohne durch die Verbindungsköpfe (42) hindurchzugehen.

2. Elektrische Drehmaschine nach Anspruch 1, wobei die ersten Belüftungskanäle (52) den Rotor (26) durchqueren und die zweiten Belüftungskanäle (54) den Stator (28) durchqueren.

3. Elektrische Drehmaschine nach einem der vorherigen Ansprüche, wobei das Belüftungssystem (30) einen Luftauslass (56) für den Austritt von Luft umfasst, die durch die ersten Belüftungskanäle (52) und die zweiten Belüftungskanäle (54) geströmt ist.

4. Elektrische Drehmaschine nach einem der vorherigen Ansprüche, wobei die elektrische Drehmaschine (16) selbstbelüftet ist.

5. Elektrische Drehmaschine nach einem der vorherigen Ansprüche, wobei das Belüftungssystem (30) einen Lüfter (60) umfasst, der drehbar mit dem Rotor (26) verbunden ist, um aufgrund der Drehung des Rotors (26) die Zirkulation eines Luftstroms über den Lufteinlass (50) und durch die ersten Lüftungskanäle (52) und die zweiten Lüftungskanäle (54) zu erzwingen.

6. Elektrische Drehmaschine nach einem der vorherigen Ansprüche, wobei das Belüftungssystem (30) konfiguriert ist, um eine Ansaugbelüftung zu erzeugen.

7. Elektrische Drehmaschine nach einem der vorherigen Ansprüche, wobei die Verbindungsköpfe (42) axial mit dem Deflektor (32) ausgerichtet sind.

8. Elektrische Drehmaschine nach einem der vorhergehenden Ansprüche, wobei sich die Verbindungsköpfe (42) in der Ansicht entlang der Mittelachse (A) hinter dem Deflektor (32) befinden.

9. Elektrische Drehmaschine nach einem der vorherigen Ansprüche, wobei der Deflektor (32) einen radial inneren Rand (62) nahe der Mittelachse (A) und einen radial äußeren Rand (64) entfernt von der Mittelachse (A) besitzt, wobei sich die Verbindungsköpfe (42) in einem solchen radialen Abstand von der Mittelachse (A) befinden, dass sie sich radial zwischen dem radial inneren Rand (62) und dem radial äußeren Rand (64) des Deflektors (32) befinden.

10. Elektrische Drehmaschine nach einem der vorhergehenden Ansprüche, wobei der Deflektor (32) eine Form aufweist, die sich von dem Lufteinlass (50) in das Innere des Hohlraums (48), in dem sich die Verbindungsköpfe (42) befinden, aufweitet.

11. Elektrische Drehmaschine nach einem der vorherigen Ansprüche, umfassend ein Gehäuse (34), das einen Flansch (68) besitzt, in dem der Lufteinlass (50) ausgebildet ist, wobei der Deflektor (32) von dem Flansch (68) getragen wird.

12. Elektrische Drehmaschine nach Anspruch 11, wobei der Deflektor (32) in den Flansch (68) integriert ist.

13. Fahrzeug, insbesondere Schienenfahrzeug, umfassend eine elektrische Drehmaschine (16) nach einem der vorherigen Ansprüche.

## Claims

1. A rotary electric machine having a central axis (A), comprising:
- a rotor (26), the rotor (26) being mounted so as to rotate about the central axis (A);
- a stator (28), the stator (28) comprising a winding (40) of generally cylindrical shape centred on the central axis (A) and having a plurality of predetermined connection heads (42) for connecting the winding to an electrical circuit, the connection heads being located at an axial end (44) of the winding (40) in a cavity (48) of the rotating electrical machine (16);
- an air ventilation system (30), the air ventilation system (30) comprising an air inlet (50) for the entry of a flow of air, the air inlet (50) discharging into the cavity opening into the cavity (48) in which the connection heads (42) are located, first ventilation ducts (52) of the rotor (26) and second ventilation ducts (54) of the stator (28); and
- a deflector (32) configured to divide the flow of air entering the cavity (48) via the air inlet (50) into a first flow of air circulating towards the first ventilation ducts (52) and a second flow of air circulating towards the second ventilation ducts (54), the deflector (32) being configured so that the first flow of air and the second flow of air bypass the connection heads (42) without passing through the connection heads (42).

2. A rotary electrical machine as claimed in claim 1, in which the first ventilation ducts (52) pass through the rotor (26) and the second ventilation ducts (54) pass through the stator (28).

3. A rotary electrical machine according to any one of the preceding claims, wherein the ventilation system (30) comprises an air outlet (56) for the exit of air having circulated in the first ventilation ducts (52) and the second ventilation ducts (54).

4. A rotary electric machine according to any one of the preceding claims, the rotary electric machine (16) being self-ventilated.

5. A rotary electric machine according to any one of the preceding claims, in which the ventilation system (30) comprises a fan (60) connected in rotation to the rotor (26) to force the circulation of a flow of air via the air inlet (50) and through the first ventilation ducts (52) and the second ventilation ducts (54) as a result of the rotation of the rotor (26).

6. A rotary electrical machine according to any one of the preceding claims, wherein the ventilation system (30) is configured to generate pull ventilation.

7. A rotary electrical machine according to any one of the preceding claims, in which the connection heads (42) are axially aligned with the deflector (32).

8. Rotating electrical machine according to any one of the preceding claims, in which, viewed along the central axis (A), the connection heads (42) are located behind the deflector (32).

9. A rotary electrical machine according to any one of the preceding claims, in which the deflector (32) has a radially inner edge (62) close to the central axis (A) and a radially outer edge (64) distant from the central axis (A), the connection heads (42) being located at a radial distance from the central axis (A) such that they are located radially between the radially inner edge (62) and the radially outer edge (64) of the deflector (32).

10. A rotary electrical machine according to any one of the preceding claims, in which the deflector (32) has a shape flaring out from the air inlet (50) towards the inside of the cavity (48) in which the connection heads (42) are located.

11. A rotary electrical machine according to any one of the preceding claims, comprising a casing (34) having a flange (68) in which the air inlet (50) is formed, the deflector (32) being carried by the flange (68).

12. A rotary electrical machine as claimed in claim 11, in which the deflector (32) is integral with the flange (68).

13. A vehicle, particularly a railway vehicle, comprising a vehicle access hatch (16) according to any of the preceding claims.
